(19) Europäisches Patentamt
European Patent Office
Office européen des brevets

(11) **EP 4 516 972 A1**

(12) **EUROPEAN PATENT APPLICATION**
published in accordance with Art. 153(4) EPC

(43) Date of publication:
**05.03.2025 Bulletin 2025/10**

(21) Application number: **23796553.8**

(22) Date of filing: **28.04.2023**

(51) International Patent Classification (IPC):
$C25D\ 7/06^{(2006.01)}$  $C22C\ 38/00^{(2006.01)}$
$C22C\ 38/28^{(2006.01)}$  $C25D\ 5/26^{(2006.01)}$
$C25D\ 5/48^{(2006.01)}$  $C25D\ 5/50^{(2006.01)}$
$C25D\ 7/00^{(2006.01)}$

(52) Cooperative Patent Classification (CPC):
**C22C 38/00; C22C 38/28; C25D 5/36; C25D 5/48;
C25D 5/50; C25D 7/00; C25D 7/06;** Y02E 60/10

(86) International application number:
**PCT/JP2023/016947**

(87) International publication number:
**WO 2023/210821 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.04.2022 JP 2022075594**

(71) Applicant: **Toyo Kohan Co., Ltd.
Tokyo 141-8260 (JP)**

(72) Inventors:
• **HORIE, Shinichirou
  Kudamatsu-shi Yamaguchi 744-8611 (JP)**

• **TSUTSUMI, Etsuro
  Kudamatsu-shi Yamaguchi 744-8611 (JP)**
• **HARADA, Naoharu
  Kudamatsu-shi Yamaguchi 744-8611 (JP)**
• **KATSURA, Keishi
  Kudamatsu-shi Yamaguchi 744-8611 (JP)**
• **YOSHIOKA, Koh
  Kudamatsu-shi Yamaguchi 744-8611 (JP)**
• **MATSUSHIGE, Daisuke
  Kudamatsu-shi Yamaguchi 744-8611 (JP)**

(74) Representative: **Hoffmann Eitle
Patent- und Rechtsanwälte PartmbB
Arabellastraße 30
81925 München (DE)**

(54) **SURFACE-TREATED METAL FOIL AND METHOD FOR PRODUCING SAME**

(57)   [Object]
To provide a surface-treated steel foil having high yield point strength and high fatigue strength.
[Solving Means]
A surface-treated steel foil has a steel sheet and an iron-nickel alloy layer formed on at least one side of the steel sheet. A <001> pole density in an inverse pole figure of a rolling direction on the side that has the iron-nickel alloy layer is higher than a <111> pole density, and the <001> pole density in the inverse pole figure of the rolling direction on the side that has the iron-nickel alloy layer is higher than a <101> pole density.

[FIG. 1]

EP 4 516 972 A1

## Description

[Technical Field]

The present invention relates to a surface-treated steel foil and a method for producing the same.

[Background Art]

Nickel-plated steel sheets are used in applications where properties such as heat resistance, electrolyte resistance, corrosion resistance, strength, and processability are required. As secondary batteries adopted, for example, in mobile phones, laptop PCs, and automotive applications, nickel-hydrogen batteries, nickel-cadmium batteries, lithium-ion batteries, and the like are known. In these secondary batteries, steel foils surface-treated with nickel plating are used as materials for their casings, collectors, and the like.

In the below-described PTL 1, for example, nickel-plated steel foils usable as materials for casings, collectors, and the like of secondary batteries are disclosed. In this literature, it is aimed to provide a nickel-plated steel foil that meets problems such as high strength, light weight, and excellent metal elution resistance during over-discharge.

[Citation List]

[Patent Literature]

[PTL 1]
Japanese Patent No. 6140611

[Summary]

[Technical Problem]

Nickel-plated steel foils are generally known as materials having corrosion resistance. Under an increasing demand for high-functionality materials in recent years, however, still higher corrosion resistance is also required for nickel-plated steel foils. At the same time, still higher fatigue strength and processability are also required together. Nonetheless, a nickel-plated steel foil provided with these properties in combination cannot be realized even by the technique disclosed in the above-described known literature.

With a view to solving such a problem, the present invention has as an object thereof the provision of a surface-treated steel foil having still higher corrosion resistance. The present invention also has as another object thereof the provision of a surface-treated steel foil having still higher fatigue strength and processability at the same time.

[Solution to Problem]

To solve the problem exemplified above, a surface-treated steel foil in one embodiment of the present invention is (1) a surface-treated steel foil including a steel sheet and an iron-nickel alloy layer formed on at least one side of the steel sheet, in which an iron-nickel alloy or nickel exists on an outermost surface of the side of the surface-treated steel foil which side has the iron-nickel alloy layer, a <001> pole density in an inverse pole figure of a rolling direction in the outermost surface of the side that has the iron-nickel alloy layer is higher than a <111> pole density, and the <001> pole density in the inverse pole figure of the rolling direction in the outermost surface of the side that has the iron-nickel alloy layer is higher than a <101> pole density.

Further, in the surface-treated steel foil described above in (1), (2) the <111> pole density in the inverse pole figure of the rolling direction is preferably lower than 3.0.

In the surface-treated steel foil described above in (1) or (2), (3) a plane (220) of nickel or a plane (220) of the iron-nickel alloy on the side that has the iron-nickel alloy layer preferably has a crystallite size of 45 nm or smaller.

In the surface-treated steel foil described above in (1) or (2), (4) the <001> pole density in the inverse pole figure of the rolling direction in the outermost surface of the side that has the iron-nickel alloy layer is preferably 1.3 or higher.

In the surface-treated steel foil described above in (1) or (2), (5) 50 pieces/$10^3$ $m^2$ or fewer of non-metallic inclusions of sizes of $\varphi 50$ $\mu m$ and greater are preferably contained internally.

In the surface-treated steel foil described above in (1) or (2), (6) iron-nickel alloy layers are preferably formed on both sides of the steel sheet.

(7) The surface-treated steel foil described above in (1) or (2) preferably has a tensile strength of 400 MPa or higher but 550 MPa or lower.

(8) The surface-treated steel foil described above in (1) or (2) preferably has a yield point strength of 360 MPa or higher.

(9) The surface-treated steel foil described above in (1) or (2) preferably has elongation of 3% or greater.

(10) The surface-treated steel foil described above in (1) or (2) preferably has a nickel deposition amount of 1.5 to 30.0 $g/m^2$ on the side that has the iron-nickel alloy layer.

(11) The surface-treated steel foil described above in (1) or (2) preferably has a thickness smaller than 100 $\mu$m.

To solve the problem exemplified above, (12) a method for producing a surface-treated steel foil in an embodiment of the present invention includes a nickel plating step of forming a nickel plating layer in a deposition amount of 1.5 to 70.0 $g/m^2$ on at least one side of a base material to provide a nickel-plated material, a first heat treatment step of applying heat treatment to the nickel-plated material to form an iron-nickel alloy, a first rolling step of rolling the nickel-plated material having the iron-nickel alloy, and a second heat treatment step of applying heat treatment under heating conditions of 500°C to 650°C and 4 to 80 hours after the first rolling step.

[Advantageous Effects of Invention]

According to the present invention, a surface-treated steel foil having still higher corrosion resistance can be provided.

[Brief Description of Drawings]

[FIG. 1]

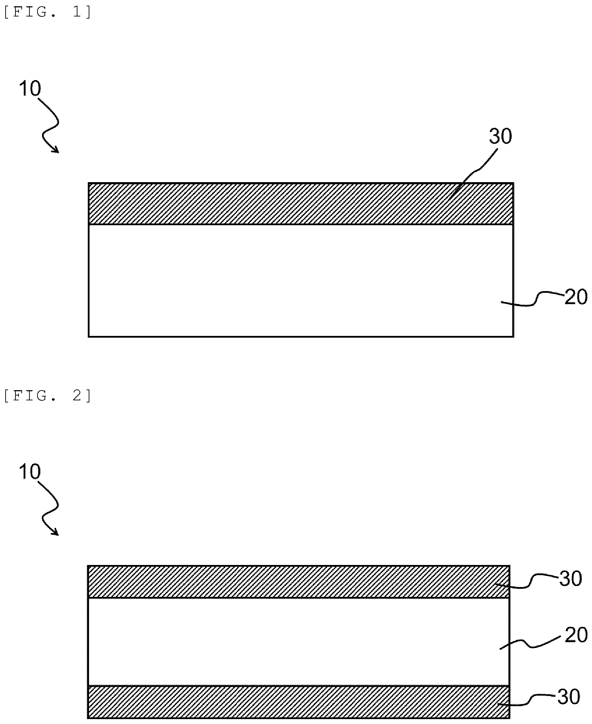

FIG. 1 is a view schematically depicting a surface-treated steel foil of an embodiment of the present invention.
[FIG. 2]
FIG. 2 is a view schematically depicting a surface-treated steel foil of another embodiment of the present invention.
[FIG. 3]

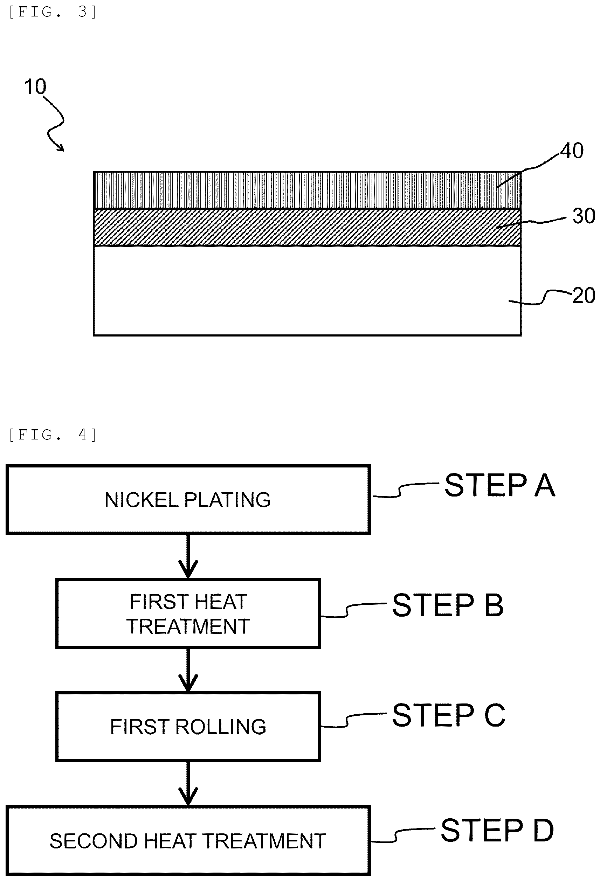

FIG. 3 is a view schematically depicting a surface-treated steel foil of a further embodiment of the present invention.
[FIG. 4]
FIG. 4 is a flow chart illustrating a method of an embodiment of the present invention for producing a surface-treated steel foil.
[FIG. 5]

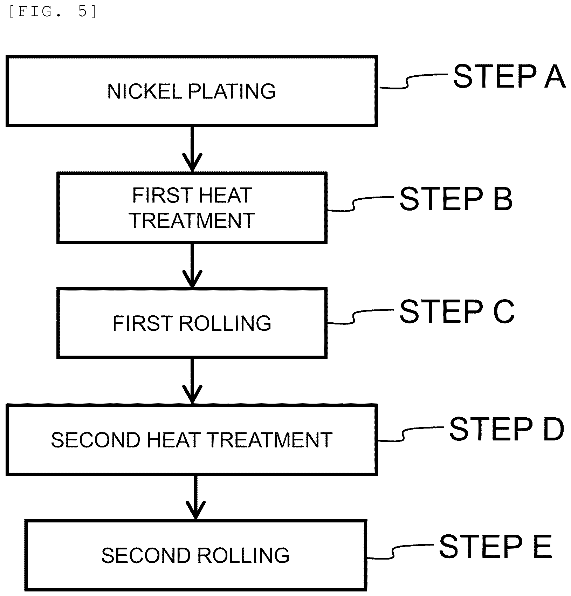

FIG. 5 is a flow chart illustrating a method of another embodiment of the present invention for producing a surface-treated steel foil.
[FIG. 6A]

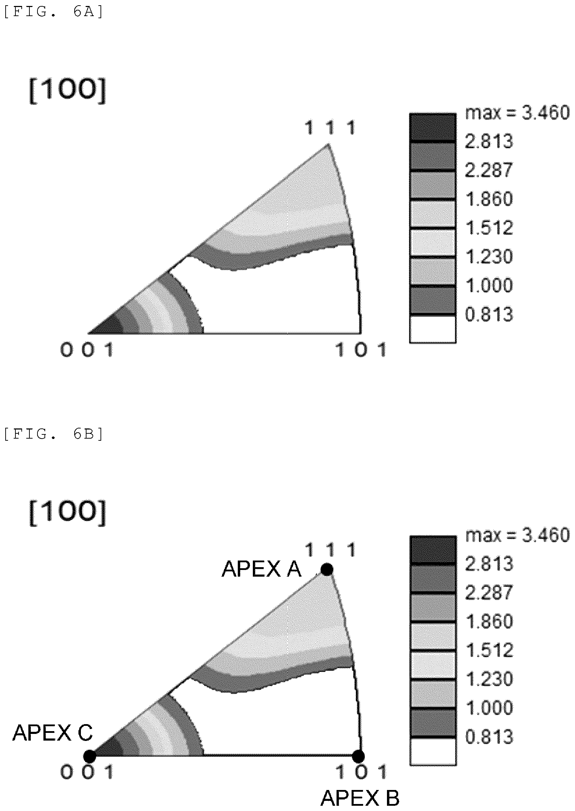

FIG. 6A is a diagram presenting an example of an inverse pole figure in an embodiment of the present invention as calculated by an electron back scatter diffraction (EBSD) method, and specifically is an inverse pole figure of a rolling direction on a side that has an iron-nickel alloy layer on a surface of Example 1. The rolling direction may also be referred to as the "RD."
[FIG. 6B]
FIG. 6B is a diagram presenting a method for determining pole densities on the surface in the embodiment of the present invention.

[Description of Embodiments]

<<Surface-treated steel foil 10>>

A description will hereinafter be made about embodiments for practicing the surface-treated steel foil of the present invention. FIG. 1 is a view schematically depicting an embodiment of a surface-treated steel foil 10 of the present invention.

The surface-treated steel foil 10 of this embodiment has a base material 20 and an iron-nickel alloy layer 30. It is to be noted that the surface-treated steel foil 10 depicted in FIG. 1 has, on one side thereof, the iron-nickel alloy layer 30, but without being limited to this configuration, may have iron-nickel alloy layers 30 on both sides of the base material 20 as depicted in FIG. 2.

Further, the iron-nickel alloy layer 30 may be arranged on an outermost surface of the surface-treated steel foil 10 as depicted in FIG. 1, or although not depicted in any figure, another metal layer may be formed on an opposite side of the iron-nickel alloy layer 30 to the base material 20.

<Base material 20>

As the base material 20 for use in the surface-treated steel foil 10 of this embodiment, a rolled steel sheet is used. As a specific type, low-carbon steel (carbon content: 0.01 to 0.15 wt%) typified by low-carbon aluminum-killed steel, ultralow-carbon steel having a carbon content lower than 0.01 wt%, or non-aging ultralow-carbon steel formed by adding Ti, Nb, and the like to ultralow-carbon steel is suitably used.

As the thickness of the base material 20 for use in the surface-treated steel foil 10 of this embodiment, a range of 10 μm to smaller than 100 μm is suited. If the surface-treated steel foil 10 is used as a current collector in a battery with a focus placed on viewpoints of volumetric and gravimetric energy densities, the thickness of the base material 20 is more preferably 25 μm to smaller than 100 μm, still more preferably 30 to 80 μm, from the viewpoint of strength, the viewpoint of a desired battery capacity, and the like. For the thickness of the base material 20, a thickness measurement by a cross-sectional observation under an optical microscope or a scanning electron microscope (SEM) can be applied.

Here, an example of the component composition of the base material 20 will be described next.

Fe is a principal element in the base material 20. As other components, C: 0.0001 to 0.15 wt%, Si: 0.001 to 0.5 wt%, Mn: 0.01 to 1.0 wt%, P: 0.001 to 0.05 wt%, S: 0.0001 to 0.02 wt%, Al: 0.0005 to 0.20 wt%, N: 0.0001 to 0.0040 wt%, and the like are contained.

Further, Ti, Nb, B, Cu, Ni, Sn, Cr, and the like may also be contained as additional components. In a range that the content of C is 0.001 to 0.01 wt%, for example, one of or both Ti and Nb may also be contained in a range of 0.01 to 0.1 wt% and a range of 0.001 to 0.05 wt%, respectively. Further, as the base material 20 in this embodiment, a steel sheet with Cr contained at lower than 10.5% therein is more preferred.

In addition, impurities that inevitably mix during the production may also be contained.

In this embodiment, preferred as the base material 20 is one in which 50 pieces/$10^3$ $m^2$ or fewer of non-metallic inclusions of sizes of φ50 μm and greater are internally contained. It is to be noted that minute non-metallic inclusions can be detected by a magnetic flux leakage flaw detection method with use of an internal microdefect detector. As the internal microdefect detector, the detector (new model IDD) disclosed in "TOYO KOHAN, Technical Reports of Toyo Kohan Co., Ltd., Vol. 33, PP 17-22" can be used.

<Iron-nickel alloy layer 30>

The iron-nickel alloy layer 30 included in the surface-treated steel foil 10 of this embodiment is an alloy layer with iron (Fe) and nickel (Ni) contained therein, and is an alloy layer in which an alloy formed of iron and nickel is contained. The alloy may also be called an "iron-nickel alloy" or an "Fe-Ni alloy." It is to be noted that, as the phase of this alloy formed of iron and nickel, it may be any one of a solid solution, eutectoid/eutectic, or compound (intermetallic compound), or two or more of these phases may coexist.

The iron-nickel alloy layer 30 included in the surface-treated steel foil 10 of this embodiment may contain one or more other metal elements and inevitable impurities insofar as the technical problem intended to be solved in the present invention can be solved. However, they are needed to be in amounts not detrimental to the crystal lattice of Ni or FeNi. For example, metal elements such as cobalt (Co) and molybdenum (Mo) and an additive element such as boron (B) may be contained in the iron-nickel alloy layer 30. It is to be noted that the proportion of metal elements other than iron (Fe) and nickel (Ni) in the iron-nickel alloy layer 30 is preferably 5 wt% or lower, with 1 wt% or lower being more preferred. As the iron-nickel alloy layer 30 may be a binary alloy formed substantially from only iron and nickel, the lower limit of the content proportion of one or more other metal elements except for inevitable impurities is 0 wt%.

The kinds and amounts of one or more other metal elements contained can be determined by known means such as an X-ray fluorescence (XRF) spectrometer, the glow discharge optical emission spectroscopy (GDS), or the Auger electron spectroscopy (AES).

The iron-nickel alloy layer 30 included in the surface-treated steel foil 10 of this embodiment is formed through the steps to be described next. Its formation proceeds through a step of forming a nickel plating layer on an original sheet as a base material to provide a nickel-plated material (nickel plating step), a step of applying heat treatment to the nickel-plated material (first heat treatment step), a step of rolling the nickel-plated material after the heat treatment (first rolling step), and a step of applying second heat treatment (second heat treatment step), in this order.

It is to be noted that the rolling in the above-described "first rolling step" is also called "rerolling" in a sense of differentiating it from rolling of the original sheet as the base material (cold rolling of hot rolled coil).

In addition, the heat treatment in the above-described "second heat treatment step" will simply be called "the second heat treatment." After the second heat treatment step, the above-described formation may also proceed through a step (second rolling step) that applies rolling to an extent not departing from the below-mentioned characteristic range of correlation between pole densities. However, the production method of the surface-treated steel foil 10 of this embodiment should not be limited to the above-described production method.

Examples of nickel plating include methods such as electrolytic plating, electroless plating, melt plating, dry plating, and the like. Of these, the method by electrolytic plating is particularly preferred from viewpoints of cost and film thickness control, for example. It is to be noted that details will be mentioned later about the method of this embodiment for producing the surface-treated steel foil.

(Pole density)

The surface-treated steel foil 10 of this embodiment is characterized in that, in an inverse pole figure of a rolling direction on a side having the iron-nickel alloy layer, the correlation between a <001> pole density and a <111> pole density satisfies a certain condition, and the correlation between the <001> pole density and a <101> pole density satisfies another certain condition.

Described specifically, the surface-treated steel foil 10 of this embodiment is characterized in that, in the inverse pole figure of the rolling direction on the side having the iron-nickel alloy layer, the <001> pole density is higher than the <111> pole density, and the <001> pole density is higher than the <101> pole density. By satisfying both of the conditions, corrosion resistance can be improved. It is to be noted that, in this description, the inverse pole figure of the rolling direction may be referred to simply as "the inverse pole figure."

In this embodiment, the <001> pole density is, but not limited to, preferably 1.3 or higher, more preferably 2.1 or higher, still more preferably 2.2 or higher. The upper limit is not particularly set, and is generally 6.0 or lower, preferably 5.0 or lower. Meanwhile, the <111> pole density in this embodiment is preferably lower than 3.0, more preferably lower than 2.0. It is to be noted that the <101> pole density is typically in a range of 0.1 to 2.0.

A description will hereinafter be made about a relation between corrosion resistance and pole densities. In a general nickel-plated steel sheet, an inverse pole figure of a nickel-plated surface in the RD of the steel sheet is high in the <101> pole density and often presents a <101> preferential orientation. After rolling or after pulling processing, on the other hand, the <111> pole density is high in the RD, and a <111> preferential orientation is often presented. As this is attributable to a phase resulted from rotation of crystals through occurrence of slide deformation in {111} as a slip plane, it is readily inferable that, if the nickel-plated steel sheet has such a preferential orientation, it is with large strain developed in crystals.

In the surface-treated steel foil of this embodiment as obtained by the below-mentioned production method, the nickel plating layer having the nickel plating amount and subjected to the first heat treatment condition, the first rolling, and the second heat treatment, or the nickel plating layer subjected to the above-described steps and also to the second rolling presents a preferential orientation as a result of complicated exposure to influences of processing strain, recovery, recrystallization, and the like. The <001> pole density of the rolling direction in this embodiment is of a high level, in other words, the lattice strain that can act as start points for corrosion is of a relatively reduced level, so that the surface-treated steel foil of this embodiment is considered to be excellent in corrosion resistance. This state is also considered to have a large tolerance to further processing deformation, so that there is a high possibility of being adaptable to processing into a complex shape. As appreciated from the foregoing, it is considered possible to balance corrosion resistance, yield point strength, and elongation at high levels. However, this balancing has not necessarily been elucidated in mechanism.

In this embodiment, "the inverse pole figure of the rolling direction on the side having the iron-nickel alloy layer" presents the results of a measurement of an inverse pole figure of the rolling direction (RD) in a crystal orientation analysis in an EBSD (Electron Back Scattered Diffraction Pattern) measurement on the side of the surface-treated steel foil 10 where the iron-nickel alloy layer 30 is arranged. In the measurement, the crystal orientation analysis is conducted using known analysis software (for example, "OIM Analysis" developed by TSL Solutions, Inc.). It is to be noted that a higher pole density indicates a higher orientation toward the direction.

(Crystallite size)

Further, the crystallite size of the plane (220) of nickel or the plane (220) of the iron-nickel alloy on the side having the iron-nickel alloy layer is preferably 45 nm (450 Å) or smaller in this embodiment. It is to be noted that the term "crystallite" means a largest agglomerate considered to be a single crystal of microcrystals.

In this embodiment, it has been found that, if the crystallite size is controlled to 45 nm or smaller, high fatigue strength can be imparted to the resulting surface-treated steel foil. Therefore, the surface-treated steel foil of this embodiment is enhanced in yield point strength and can realize an improvement in fatigue strength, because the crystallite size of the plane (220) of nickel or the plane (220) of the iron-nickel alloy on the side having the iron-nickel alloy layer is 45 nm or smaller. It is also possible to realize a material having still better processability, because the yield point elongation can secondarily be suppressed owing to the above-described characteristics.

It is to be noted that, although no particular limitation is imposed as the lower limit of the crystallite size, the crystallite size is preferably 5 nm or greater because an unduly small crystallite size may lead to a nickel film of excessively high hardness.

The crystallite size on the side having the iron-nickel alloy layer in the surface-treated steel foil 10 of this embodiment is determined from a peak half-width in X-ray diffraction using the following formula. A measurement of X-ray diffraction is conducted using, for example, a known X-ray diffractometer. For a calculation of the crystallite size, a peak of the plane (220) of the iron-nickel alloy, which appears at $2\theta = 72°$ to $79°$, is used.

$$D = K \times \lambda / (\beta \times \cos\theta)$$

D: Crystallite size

K: Scherrer factor (use K = 0.94)
$\lambda$: Wavelength of X-ray used
$\beta$: Half-width in X-ray diffraction of crystallites
$\theta$: Bragg angle

(Thickness of surface-treated steel foil 10)

A description will next be made about the thickness of the whole surface-treated steel foil 10 in this embodiment.
The overall thickness of the surface-treated steel foil 10 in this embodiment is preferably smaller than 100 $\mu$m. From a viewpoint of strength, a viewpoint of a desired battery capacity, and the like, more preferred is 10 $\mu$m or greater but smaller than 100 $\mu$m, still more preferred is 25 $\mu$m or greater but smaller than 100 $\mu$m, and particularly preferred is 30 $\mu$m or greater but 80 $\mu$m or smaller.
It is to be noted that, for "the thickness of the surface-treated steel foil 10" in this embodiment, a thickness measurement by a micrometer is suited.

(Nickel deposition amount)

In the surface-treated steel foil 10 of this embodiment, the deposition amount of nickel on the side having the iron-nickel alloy layer 30 is preferably 1.5 to 30.0 g/m$^2$ from the viewpoints of yield point strength and fatigue strength. From the same viewpoints, the lower limit of the nickel deposition amount is more preferably 3.0 g/m$^2$, still more preferably 5.0 g/m$^2$, particularly preferably 10.0 g/m$^2$. Further, the upper limit of the nickel deposition amount is more preferably 25.0 g/m$^2$, still more preferably 20.0 g/m$^2$, particularly preferably 17.5 g/m$^2$.
In addition, iron-nickel alloy layers 30 may be formed on both sides of the base material 20 in the surface-treated steel foil 10 of this embodiment as depicted in FIG. 2. If this is the case, the deposition amount of nickel on both of the sides is preferably 3.0 to 60.0 g/m$^2$ in total.
The above-mentioned nickel deposition amount can be determined by measurement of a total nickel amount on the iron-nickel alloy layer 30 with use of an XRF spectrometer. However, this method is not limitative, and another known measurement method can also be used.
In this embodiment, the iron-nickel alloy layer 30 may be a layer with no brightener added, or a layer formed by adding a brightener, which can be a brightener for semi-brightness.
It is to be noted that the above-described "bright" or "matte" relies upon a visual evaluation of the appearance and these are hardly distinguishable in terms of precise numerical values. Moreover, the degree of brightness is variable depending on other parameters such as bath temperature to be described subsequently herein. Accordingly, the terms "bright" and "matte" as used in this embodiment are basically defined when a focus is placed on the inclusion or non-inclusion of a brightener.

(Tensile strength)

The tensile strength of the surface-treated steel foil 10 of this embodiment is considered to be 300 MPa or higher but 750 MPa or lower. From viewpoints of more preferred yield point strength and brittleness, 350 MPa or higher but 590 MPa or lower is preferred, with 400 MPa or higher but 550 MPa or lower being particularly preferred.
It is to be noted that, in this embodiment, the tensile strength of the surface-treated steel foil 10 can be measured, for example, by conducting a measurement as will be described hereinafter. Punching of a metal piece as JIS Z 2241 No. 5 specimen is carried out. With this specimen, a tensile test can be conducted following a tensile testing method compliant with JIS Z 2241.

(Yield point strength)

With the surface-treated steel foil 10 of this embodiment, the yield point strength is considered to be 200 MPa or higher but 720 MPa or lower. From viewpoints of subsequent processability and the like, however, the yield point strength is preferably 360 MPa or higher. From the viewpoint of brittleness, meanwhile, 550 MPa or lower is preferred. It is to be noted that the yield point strength can be determined by conducting a measurement, for example, with a similar tester as for the above-described tensile strength.

(Elongation)

The elongation of the surface-treated steel foil 10 of this embodiment is considered to be 1% or greater but 35% or smaller. From viewpoints of more preferred yield point strength and fatigue strength, however, the lower limit of the elongation is preferably 3% or greater in particular. It is to be noted that, although the elongation is needed to be 35% or smaller, the yield point elongation is preferably 0.5% or smaller to suppress stretcher strains during passing or during processing. The lower limit of the yield point elongation is 0. It is to be noted that the elongation of the surface-treated steel foil 10 of this embodiment means a value measured following JIS Z 2241 (Metallic materials - Tensile testing method).

In the surface-treated steel foil 10 of this embodiment, minute non-metallic inclusions that exist internally are preferably 50 pieces/$10^3$ m² or fewer. It is to be noted that the minute non-metallic inclusions can be detected by the magnetic flux leakage flaw detection method with use of the internal microdefect detector. As the internal microdefect detector, the detector (new model IDD) disclosed in "TOYO KOHAN, Vol. 33, PP 17-22" can be used.

The surface-treated steel foil 10 of this embodiment may further has a metal layer 40 formed on the iron-nickel alloy layer 30 as depicted in FIG. 3. Examples of a metal material that makes up the above-described metal layer 40 include nickel, chromium, titanium, copper, cobalt, iron, and the like. Of these, nickel or a nickel alloy is particularly preferred for its excellent corrosion resistance and strength.

In the surface-treated steel foil 10 of this embodiment, a roughened nickel layer 50 may further be formed on an outermost surface although not depicted in any of the figures. It is to be noted that the above-mentioned metal layer 40 may be a roughened nickel layer or a roughened nickel layer may be formed on the above-mentioned metal layer 40.

Details are omitted about the roughened nickel layer, as it is described, for example, in an application (WO 2021/020338 A, etc.) by the present applicant.

<<Method for producing surface-treated steel foil>>

An example of the method for producing the surface-treated steel foil 10 of this embodiment will be described using some of the figures.

As illustrated in FIG. 4, the example of the production method of this embodiment has a step of forming a nickel plating layer on an original sheet as a base material to provide a nickel-plated material (STEP A: nickel plating step), a step of applying heat treatment to the nickel-plated material (STEP B: first heat treatment step), a step of rolling the nickel-plated material after the heat treatment (STEP C: first rolling step), and a step of applying second heat treatment (STEP D: second heat treatment step), in this order.

The surface-treated steel foil obtained by the production method of this embodiment is one that the iron-nickel alloy layer 30 is formed by diffusion of iron of the base material 20 (original sheet) into the nickel plating layer, the <001> pole density in the inverse pole figure of the rolling direction on the side having the iron-nickel alloy layer 30 is higher than the <111> pole density, and the <001> pole density in the inverse pole figure of the rolling direction on the side having the iron-nickel alloy layer is higher than the <101> pole density (hereinafter referred to also as "correlation of the pole densities").

Further, STEP C and STEP D may be repeated after STEP D.

It is to be noted that the rolling in the above-described "first rolling step" is also called "rerolling" in the sense of differentiating it from rolling of the original sheet.

In addition, the heat treatment in the above-described "second heat treatment step" will simply be called "the second heat treatment."

As illustrated in FIG. 5, a second rolling step (STEP E) may further be included subsequently for purposes such as further thickness adjustment, mechanical property adjustment, and the like. It is still preferred to satisfy the above-described correlation of the pole densities even if the production method also proceeds through this second rolling step.

Although not illustrated in any of the figures, steps such as a replating step and a roughened nickel layer forming step may also be included after STEP D or STEP E.

Descriptions will hereinafter be made about details of the respective steps.

<Pre-step>

First, a steel sheet is provided as an original sheet.

The term "original sheet" as used herein means a steel sheet of steel, which becomes a base material portion when formed into a surface-treated steel foil through the below-described respective steps, before the below-described rolling. As with the base material, the steel sheet that is used as the original sheet is therefore low-carbon steel or ultralow-carbon steel preferably. Further, the original sheet is preferably a cold-rolled steel sheet.

It is to be noted that, concerning the component composition of the steel sheet as the original sheet, the content of especially S (sulfur; which may hereinafter be also referred to as "sulfur") is preferably 0.0001 to 0.02 wt% from a viewpoint of the corrosion resistance or the like of the nickel film of the resulting surface-treated steel foil. The upper limit of the content of S is more preferably 0.018 wt%, still more preferably 0.015 wt%.

Although no particular limitation is imposed on the thickness of the original sheet, the original sheet is preferably 150 to 500 $\mu$m in thickness to obtain one having such a thickness that it is called a "steel foil" after the below-mentioned first rolling step.

To obtain a foil of 120 $\mu$m or smaller in thickness after the below-mentioned first rolling step, the thickness of the original sheet is more preferably 400 $\mu$m or smaller. This is because a thinner original sheet decreases a rolling reduction during rolling and is easier to avoid exposure of iron.

To obtain a foil of smaller than 100 $\mu$m in thickness after the below-mentioned first rolling step, the thickness of the original sheet is still more preferably 350 $\mu$m or smaller, with 300 $\mu$m or smaller being particularly preferred.

It is to be noted that, if a cold-rolled steel sheet is used as an original sheet, "annealing" which is generally applied to eliminate processing hardening of a cold-rolled steel sheet can be conducted before the below-mentioned nickel plating step.

In this embodiment, this "annealing" of the cold-rolled steel sheet can be omitted, because the elimination of the processing hardening of the cold-rolled steel sheet can concurrently be conducted in the first heat treatment step that has as its principal purpose the below-mentioned softening of the nickel plating.

<STEP A: nickel plating step>

The nickel plating step is a step that applies nickel, which is needed to form the iron-nickel alloy layer 30 in the below-mentioned second heat treatment, as a nickel-plating layer onto at least one side of the above-mentioned original sheet.

In this nickel plating step, 1.5 to 70.0 g/m$^2$ per side is preferred as a nickel-plating deposition amount to be applied to the original sheet. More preferably, nickel plating is applied to both sides at 10 g/m$^2$ or more but 70.0 g/m$^2$ or less per side, with at least one side being controlled more preferably to 5 g/m$^2$ or more per side, particularly preferably to 10 g/m$^2$ or more per side. It is to be noted that the upper limit is more preferably 70 g/m$^2$ or less, still more preferably 65 g/m$^2$ or less.

If the nickel-plating deposition amount is more than 70 g/m$^2$, the productivity is poor, and moreover, the foil may rip due to insufficient elongation of the whole foil during the first rolling step despite having been subjected to the first heat treatment.

If the nickel-plating deposition amount is less than 5 g/m$^2$, on the other hand, nickel is insufficient in the iron-nickel alloy layer 30 to be finally obtained after the second heat treatment step, so that the correlation of the pole densities may not be satisfied or preferred yield point strength and fatigue strength may not be obtained.

As plating conditions and the like for electrolytic plating in the above-described nickel plating step, known conditions can be applied. Examples of plating conditions will hereinafter be described.

[Examples of nickel plating bath and plating conditions]

- Bath composition: known Watts bath

      Nickel sulfate hexahydrate: 200 to 300 g/L
      Nickel chloride hexahydrate: 20 to 60 g/L
      Boric acid: 10 to 50 g/L
      Bath temperature: 40°C to 70°C
      pH: 3.0 to 5.0
      Agitation: air agitation or jet agitation
      Current density: 5 to 30 A/dm$^2$

It is to be noted that, as to the bath composition, a known nickel sulfamate bath or citric acid bath may also be used beside the above-described Watts bath. In addition, an additive such as a known brightener may be added to the plating bath to apply bright nickel plating or semi-bright nickel plating.

<STEP B: first heat treatment step>

A description will next be made about the first heat treatment step. The first heat treatment step is a heat treatment step that is performed first after the above-mentioned nickel plating step, and is performed under a reducing atmosphere. This first heat treatment step has as its principal purpose softening of the nickel plating layer, which has been formed in the above-mentioned nickel plating step, prior to the below-mentioned rolling step.

Even if rolled without applying heat treatment after nickel plating, no problem arises insofar as the rolling is applied to such an extent as rolling for mechanical property adjustment. In such a case that, for production of a foil, a rolling reduction, such as exceeding 35%, is applied to obtain a surface-treated metal foil of 10 to 200 $\mu$m from an original sheet of 0.15 to 2.0 mm, the nickel plating layer, as it is, is too hard to produce a foil, or peels off, so that the intended surface-treated steel foil having the iron-nickel alloy layer cannot be produced. Heat treatment is therefore conducted with a purpose to soften the nickel plating layer.

As heat treatment conditions for the first heat treatment step, it is possible to apply conditions under which the nickel of the nickel plating layer is softened sufficiently to such an extent as enabling the below-mentioned first rolling step. For example, heat treatment conditions in known batch annealing (box annealing) or continuous annealing can be applied.

As examples of a temperature and time in the case of continuous annealing treatment, the heat treatment is conducted preferably in ranges of 600°C to 950°C and 15 to 150 seconds of soaking time. In the case of a lower temperature or a shorter period of time than the foregoing, softening is so insufficient that a foil may hardly be formed when rolled in the subsequent first rolling step. Such a lower temperature or a shorter period of time is hence not preferred. In the case of a higher temperature or a longer period of time than the above-described heat treatment range, on the other hand, the steel foil or the like as the base material undergoes substantial changes in mechanical properties. From a viewpoint of a substantial reduction in strength or from a cost viewpoint, such a higher temperature or a longer period of time is thus not preferred.

For sufficient softening, soaking time of 20 to 150 seconds is more preferred.

As examples of a temperature and time in the case of batch annealing (box annealing) treatment, the heat treatment is conducted preferably in ranges of 450°C to 690°C and 1.5 to 20 hours of soaking time, with the total time of heating, soaking, and cooling time being in a range of 4 to 80 hours. In the case of a lower temperature or a shorter period of time than the foregoing, softening is so insufficient that a foil may hardly be formed when rolled in the subsequent first rolling step. Such a lower temperature or a shorter period of time is hence not preferred. In the case of a higher temperature or a longer period of time than the above-described heat treatment range, on the other hand, the steel foil or the like as the base material undergoes substantial changes in mechanical properties. From a viewpoint of the possibility of a substantial reduction in strength or from a cost viewpoint, such a higher temperature or a longer period of time is thus not preferred.

If the deposition amount of the nickel plating is 10 g/m² or less per side, especially is as little as 6 g/m² or less per side, however, the heat treatment at a high temperature or for a long period of time allows the diffusion of Fe to proceed from the iron of the base material during the second heat treatment, so that the corrosion resistance may be lowered. Continuous annealing, for example, at a temperature lower than 780°C is therefore preferred, with a temperature lower than 750°C being more preferred.

It is to be noted that, when having been subjected to this first heat treatment, the iron of the original sheet and the nickel of the nickel plating layer have mutually diffused under heat, and an iron-nickel diffusion layer has been formed. In other words, on the side subjected to nickel plating in the above-mentioned nickel plating step, the iron-nickel diffusion layer has been formed or the iron-nickel diffusion layer and a soft nickel layer have been formed at the time of completion of the first heat treatment step. Thus, the term "iron-nickel diffusion layer" in this embodiment means an alloy layer that has been obtained by heat treatment of iron and nickel and that does not satisfy the characteristics of the above-described correlation between the pole densities. Further, the term "soft nickel layer" in this embodiment means a layer of softened nickel that the iron of the original sheet has not been diffused into the nickel of the nickel plating layer through the heat treatment.

It is to be noted that the above-described correlation between the pole densities in this embodiment is only required to be satisfied at the time of completion of the below-mentioned second heat treatment step. At the time of completion of the first heat treatment step, therefore, the above-described correlation between the pole densities may be or may not be satisfied or.

It is to be noted that the thickness of the heat-treated steel sheet after having been subjected to this first heat treatment step is not different from the thickness of the nickel-plated steel sheet obtained after the nickel plating step.

<STEP C: first rolling step>

A description will next be made of the first rolling step in the production method of this embodiment. The first rolling step in this embodiment is a step that rolls the heat-treated nickel plating material having been subjected to the above-described nickel plating step and first heat treatment step. This first rolling step has as its purpose obtaining a desired foil thickness or obtaining beforehand such a thickness as causing no problem in obtaining a foil of a desired thickness at the time of completion of the below-mentioned second rolling step.

As a rolling reduction rate in this first rolling step, 35% or higher is preferred. Controlling the rolling reduction rate to 35% or higher enables obtainment of a surface-treated steel foil having preferred yield point strength and fatigue strength. The rolling reduction rate is more preferably 50% or higher.

However, a higher rolling reduction rate leads to a greater lattice strain, thereby failing to satisfy the correlation between the pole densities. Therefore, the rolling reduction rate is preferably 85% or lower, more preferably 80% or lower, still more preferably 78% or lower, particularly preferably 75% or lower.

As rolling rolls that act in this first rolling step, a combination of rolling rolls or a plurality of combinations of rolling rolls may be used. In general, a rolling machine is constructed of a plurality of combinations of upper and lower rolls that directly act to thin a sheet, specifically, rolling rolls, and passing rolls. When rolling, there is a case in which one combination of rolling rolls that act to roll is arranged or another case in which a plurality of combinations of rolling rolls acts. In this embodiment, the rolling rolls that act in the first rolling step may be either in one combination or in a plurality of combinations. As a further alternative, passing may be made, for example, twice through three combinations of rolling rolls, and hence, rolling may be conducted with rolling rolls in six combinations in total. Generally, an increase in the number of times of passing through rolling rolls is prone to cause troubles due to processing hardening during rolling. Six or fewer combinations of rolling rolls that act to roll are therefore preferred, with 4 or fewer combinations being more preferred. Here, it is to be noted that, as a combination of rolling rolls, an upper roll and a lower roll that directly make contact with the sheet and through which the thickness changes are counted.

Further, the term "rolling reduction rate" mentioned above means a rolling reduction rate that is obtained from thicknesses before and after the first rolling step. When passed twice through three combinations of rolling rolls, the rolling reduction rate therefore means a rolling reduction rate that is obtained from a thickness before the first passing and a thickness after the second passing.

In the first rolling step, the rolling reduction rate by the first combination of rolling rolls is not particularly limited, but is preferably 35% or higher from a viewpoint that suppression of exposure of iron is facilitated by conducting the thinning while in an initial softest state. However, the rolling reduction rate by the first combination of rolling rolls is preferably lower than 50% from a viewpoint that the thickness before rolled by the first combination of rolling rolls is the largest and the uniformity of the thickness is hardly controlled if the rolling reduction rate is too high.

It is to be noted that the nickel deposition amount on the steel foil after the first rolling step, in other words, the amount of nickel per area after the nickel applied in the nickel plating step has been spread by the rolling, is preferably more than $1.2 \text{ g/m}^2$, more preferably $6.0 \text{ g/m}^2$ or more, still more preferably $6.5 \text{ g/m}^2$ or more on at least one side from the viewpoint of corrosion resistance. Further, both sides of the steel foil each preferably have a nickel deposition amount of more than $1.2 \text{ g/m}^2$ to obtain more stable corrosion resistance.

<STEP D: second heat treatment step>

A description will next be made about the second heat treatment step in the production method of this embodiment.

The second heat treatment step is a step that conducts, under a reducing atmosphere, annealing on the material obtained after the above-described first rolling step.

This second heat treatment step is conducted with purposes to make the <001> pole density in the inverse pole figure of the rolling direction on the side having the iron-nickel alloy layer higher than the <111> pole density and also to make the <001> pole density in the inverse pole figure of the rolling direction on the side having the iron-nickel alloy layer higher than the <101> pole density.

In more detail, the iron-nickel diffusion layer, or the iron-nickel diffusion layer and the soft nickel layer, which has or have been formed on the surface through the above-mentioned first heat treatment, is or are first rolled along with the original sheet in the first rolling step. The thickness of the material is reduced by this rolling. At the same time, the <111> orientation is considered to be brought into parallel with the rolling direction, in other words, the <111> pole density is considered to become high.

At locations where the material has become extremely thin by the first rolling step or locations where strains have been introduced by the first rolling step, lattice strains are eliminated (removed) by the second heat treatment step, and the correlation between the pole densities is satisfied. As a consequence, the surface-treated steel foil having both yield point strength and elongation is obtained.

Among heat treatment conditions for the second heat treatment step, those which are to satisfy the correlation between the pole densities differ according to the conditions of the steel foil before the second heat treatment.

If the second heat treatment step is continuous annealing, for example, the heat treatment is conducted in ranges of 680°C to 950°C and 30 to 150 seconds of soaking time. In the case of batch annealing (box annealing), meanwhile, the heat treatment is conducted in ranges of 500°C to 650°C and 1.5 to 20 hours of soaking time, with the total time of heating, soaking, and cooling time being in a range of 4 to 80 hours.

The second heat treatment step in this embodiment may be either box annealing or continuous annealing. In the case of box annealing, however, there are such advantages that handling is easy, higher precision control of mechanical properties is possible, age hardening can be more suppressed and control of stretcher strains is possible, intended pole densities are easily obtained over an entire surface even in a wide steel sheet, and so on.

If the heat treatment is conducted with a temperature lower than the above-described heat treatment temperature or in a shorter period of time, the <001> pole density may not become sufficiently high. Such a lower heat treatment temperature or such a shorter period of time is therefore not preferred.

In the case of conditions configured to meet the correlation between the pole densities, no limitations are imposed. Especially if the rolling reduction rate in the above-mentioned first rolling step is set to 50% or higher, however, it is preferred to apply conditions of 700°C to 750°C and 60 to 150 seconds of soaking time or 760°C or higher in the case of continuous annealing such that, in the second heat treatment step, the <001> pole density is sufficiently increased and lattice strains are eliminated. In the case of box annealing, it is preferred to apply conditions of 500°C or higher but lower than 540°C and 4 hours or longer of soaking time or 540°C or higher.

It is to be noted that the nickel deposition amount in the surface-treated steel foil obtained after having been subjected to the second heat treatment step is not different from the nickel deposition amount after having been subjected to the above-mentioned first rolling step.

Especially in the case of a continuous steel strip, surface treatment may be applied before the second heat treatment step, to prevent adhesion of the nickel plating. Examples of this surface treatment for the prevention of adhesion of the nickel plating include the formation of a layer of a silicon oxide in a bath of sodium orthosilicate as a principal component as disclosed in Japanese Patent Laid-open No. H08-333689. It is to be noted that this surface treatment for the prevention of adhesion of the nickel plating may be removed after the second heat treatment step.

<STEP E: second rolling step>

A description will next be made about the second rolling step after the second heat treatment step. This second rolling step is a step that is for such purposes as further thickness adjustment, quality adjustment, and the like of the surface-treated steel foil. It is to be noted that this second rolling step is not an essential step and can be omitted as appropriate.

In this second rolling step, the rolling reduction rate (the rolling reduction rate as calculated from a difference in thickness between before and after the second rolling step) is preferably 35% or lower, more preferably 33% or lower, still more preferably 25% or lower. There is no lower limit in particular. If quality adjustment rolling in which the thickness remains substantially unchanged is included, the lower limit is 0% or higher.

It is to be noted that, at the time of completion of this second rolling step, there is a need to satisfy the above-mentioned correlation between the pole densities.

As the nickel deposition amount decreases according to the rolling reduction rate in the second rolling step, if the second rolling step is to be conducted, there is a need to achieve a preferred nickel deposition amount in the state after the second rolling.

The preferred nickel deposition amount after the second rolling is preferably more than $1.2\,g/m^2$, more preferably $6.0\,g/m^2$ or more, still more preferably $6.5\,g/m^2$ or more on at least one side from the viewpoint of corrosion resistance. To obtain more stable corrosion resistance, the nickel deposition amount after the second rolling is preferably more than $5.0\,g/m^2$ on both of the sides of the steel foil.

<Other steps>

It is to be noted that, although not illustrated in the figures, a step (replating step) that applies plating to form the metal layer 40 may also be included after at least any of the first rolling step, the second heat treatment step, and the second rolling step.

As a further alternative, a step that forms the roughened nickel layer 50 on the outermost surface may also be included in the production method of this embodiment for the surface-treated steel foil 10.

It is to be noted that, in the production method of this embodiment for the surface-treated steel foil 10, a continuous production method (for example, a roll-to-roll method) can be applied, or production by a batch method using, for example, cutlength sheets is also possible.

It is preferred from the viewpoints of yield point strength and fatigue strength that the surface-treated steel foil obtained by the production method of this embodiment satisfies at least any of a tensile strength of 400 MPa or higher but 550 MPa or lower, a yield point strength of 360 MPa or higher, and elongation of 3% or greater.

It is also preferred from the viewpoint of corrosion resistance that the surface-treated steel foil obtained by the production method of this embodiment has an Ni adhesion amount of 1.2 to $30.0\,g/m^2$ on the side having the iron-nickel alloy layer.

<<Examples>>

The present invention will hereinafter be described more specifically by giving Examples. Descriptions will first be made about measurement methods in Examples.

[Acquisition of pole densities by EBSD method]

On a surface-treated steel foil obtained, a crystal orientation analysis by an EBSD measurement was conducted using a Scanning Electron Microscope (SEM), whereby an inverse pole figure of a rolling direction on a side having an iron-nickel alloy layer was measured, and <001>, <111>, and <101> pole densities were evaluated. "FE-SEM (SU8020)" manufactured by Hitachi High-Tech Corporation was used as the SEM, and in the crystal orientation analysis by the EBSD measurement, analysis software ("OIM Analysis" developed by TSL Solutions, Inc.) was used. Measurement conditions for the EBSD measurement were set as follows.

(a) SEM conditions

- Beam conditions: acceleration voltage 20 kV, irradiation current 20 $\mu$A
- Work distance: 20 mm
- Observation vision field: Rolling direction (RD) 100 $\mu$m $\times$ a direction (TD) perpendicular to the rolling direction 120 $\mu$m
- Observation surface: Surface of a specimen (Note) Attach the specimen such that a measurement coordinate system and a specimen coordinate system become the same.

That is, the specimen was so attached that the RD in the measurement coordinate system and the rolling direction of the specimen coincide with each other.

(b) EBSD conditions

- Measurement program: OIM Data Collection (Ver. 6.21)
- Step width: 0.2 $\mu$m

(c) Analysis conditions

- Data analysis program: OIM Analysis (Ver. 6.20)

(Note) In the inverse pole figure of the RD (rolling direction), the <111>, <101>, and <001> pole densities were evaluated.
The EBSD measurement was conducted, and the inverse pole figure of the rolling direction was acquired using the data analysis program.
FIG. 6A is based on the inverse pole figure and presents, concerning the degree of integration in each orientation, the orientation state of a texture by contours under an assumption that the pole density in a state with no statistical bias in crystal orientation, in other words, in what is generally called a random state, is set to 1. It is appreciated from this figure that, in the inverse pole figure of RD (rolling direction) of the target specimen, the degree of integration in the <001> orientation is high.
On each specimen as presented in FIG. 6A, the pole densities of the <111>, <101>, and <001> orientations in the present invention were determined using contour plots of RD (rolling direction). Described specifically, a numerical value read on the analysis software by selecting the position of an apex A in the case of <111> pole density, an apex B in the case of <101>, or an apex C in the case of <001> was regarded as a pole density of the corresponding orientation as presented in FIG. 6B. It is to be noted that, if in a vicinity of each apex (for example, a range of the same color in the contour plots), variations in pole density are small, and therefore, the maximum pole density read by selecting the vicinity of the apex (the range of the same color in the contour plots) may be adopted.

[Measurement method of crystallite size]

For the measurement of a crystallite size, X-ray diffraction was conducted using an X-ray diffractometer (a fully-automated multipurpose horizontal X-ray diffractometer "SmartLab," manufactured by Rigaku Corporation).

<System configurations>

- X-ray source: CuK$\alpha$
- Goniometer radius: 300 mm
- Optical system: focusing method

(Incident slit system)

- Soller slit: 5°
- Longitudinal limiting slit: 5 mm
- Scatter slit: 2/3°

(Receiving slit system)

- Divergence slit: 2/3°
- Soller slit: 5°
- Receiving slit: 0.3 mm
- Monochromatization method: counter monochromator method
- Detector: scintillation counter

<Measurement parameters>

- Tube voltage-tube current: 45 kV 200 mA
- Scan axis: $2\theta/\theta$ (focusing geometry)
- Scan mode: continuous
- Measuring range: $2\theta$ 72° to 79°
- Scan rate: 2°/min
- Step: 0.02°

A specimen was cut from the resulting surface-treated steel foil and was mounted on a measurement sample stage. On the side having the iron-nickel alloy layer, a range of X-ray diffraction angle $2\theta$ = 72° to 79° was subjected to an X-ray diffraction measurement by a reflection method. Using integrated powder X-ray analysis software "PDXL" manufactured by Rigaku Corporation, on the resulting measurement value, the crystallite size was calculated based on the below-described formula.

Described specifically, as overlapping of (220) plane peaks of the iron-nickel alloy and nickel was observed in the resulting measurement chart, optimization processing of the peaks was conducted in the range of X-ray diffraction angle $2\theta$ = 72° to 79° with use of the above-described X-ray analysis software, so that separation of the peaks and calculation of a crystallite size after the separation of the peaks were conducted. It is to be noted that, if the peak height (cps) derived from nickel was high compared with the peak height (cps) derived from the iron-nickel alloy, after the separation of the peaks, the crystallite size of the peak derived from nickel was used instead. Crystallite sizes are presented in Table 2. The inclusion of _Ni or _FeNi in the crystallite size column in Table 2 indicates a peak used for the calculation of the crystallite size.

$$D = K \times \lambda / (\beta \times \cos\theta)$$

D: Crystallite size

K: Scherrer factor (use K = 0.94)
$\lambda$: Wavelength of X-ray used
$\beta$: Half-width in X-ray diffraction of crystallites
$\theta$: Bragg angle

[Neutral salt spray test and evaluation of corrosion resistance]

The resulting surface-treated steel foil was cut into a size of 60 mm in width and 130 mm in length, one side was chosen as an evaluation surface, and end faces were then masked with a tape. Following JIS Z 2371:2015 Neutral Salt Spray Test, neutral salt water was sprayed at a salt concentration of 5% (NaCl: 50 g/L) and a spray temperature of 35°C for 2 hours by a salt spray test instrument manufactured by Suga Test Instruments Co., Ltd. After the spray, the number of rust pits on the side having the iron-nickel alloy layer was visually counted, and evaluation was conducted in terms of scores as follows.

Score 5: fewer than 150 pits/dm$^2$
Score 4: 150 to fewer than 250 pits/dm$^2$
Score 3: 250 to fewer than 350 pits/dm$^2$
Score 2: 350 to fewer than 500 pits/dm$^2$
Score 1: 500 pits/dm$^2$ or more

[Evaluation of mechanical properties by tension test]

Tensile strength (TS), upper yield-point strength (YP), yield point elongation (YP-EL), and elongation at break (EL) were measured by the following methods.
First, punching of a metal piece as JIS Z 2241 No. 5 specimen was carried out. With that specimen, a tensile test was conducted following the tensile testing method compliant with JIS Z 2241. It is to be noted that the specimen was collected in such a manner as to make a pull direction parallel to the rolling direction.
As a machine for the tensile test, a tension tester (a universal material testing machine "TENSILON RTC-1350A" manufactured by ORIENTEC CO., LTD.) was used. As measurement conditions, the measurement was conducted at room temperature and under conditions of a tension rate of 10 mm/min.
Following JIS Z 2241, the tensile strength, yield point, (upper yield point), yield point elongation, and elongation (elongation at break) were measured.

[Measurement of minute inclusions by magnetic flux leakage flaw detection method]

Minute non-metallic inclusions existed inside the resulting surface-treated steel foil were detected by the magnetic flux leakage flaw detection method with use of the internal microdefect detector. As the internal microdefect detector, the detector (new model IDD) disclosed in "TOYO KOHAN, Vol. 33, PP 17-22" was used.
Described specifically, the size and number of non-metallic inclusions after the application of the nickel plating to the steel sheet and before the first rolling were measured. The thickness of the nickel-plated steel sheet upon the measurement was 100 to 300 $\mu$m. When the measurement results are converted into the number of non-metallic inclusions that have sizes of $\varphi$50 $\mu$m and greater and that are contained in $10^3$ m$^2$ when rolled to the thickness of this embodiment, the minute non-metallic inclusions can be evaluated as follows.

Particularly preferred: 10 pieces/$10^3$ m$^2$ or fewer
Still more preferred: 20 pieces/$10^3$ m$^2$ or fewer
More preferred: 30 pieces/$10^3$ m$^2$ or fewer
Preferred: 40 pieces/$10^3$ m$^2$ or fewer
Practically usable: 50 pieces/$10^3$ m$^2$ or fewer

<Example 1>

A cold-rolled steel sheet (thickness: 170 $\mu$m) of low-carbon aluminum-killed steel having a chemical composition presented below was first prepared as an original sheet for the base material 20.

C: 0.049 wt%, Mn: 0.33 wt%, Si: 0.003 wt%, P: 0.012 wt%, S: 0.009 wt%, Al: 0.047 wt%, Balance: Fe and inevitable impurities

After electrolytic degreasing and pickling by dipping in sulfuric acid were then carried out on the prepared original sheet, nickel plating was conducted under the below-described conditions, so that, with a target thickness as presented in Table, nickel plating layers were formed on both sides (nickel plating step). It is to be noted that the nickel plating conditions were set as follows.

(Ni plating conditions)

    Bath composition: Watts bath
    Nickel sulfate hexahydrate: 250 g/L
    Nickel chloride hexahydrate: 45 g/L
    Boric acid: 30 g/L
    Bath temperature: 60°C
    pH: 4.0 to 5.0
    Agitation: air agitation or jet agitation
    Current density: 10 A/dm$^2$

The nickel deposition amount was measured using an XRF spectrometer. It is to be noted that, after each of the below-mentioned second heat treatment step and second rolling step, a measurement was also made similarly by the XRF spectrometer to determine the nickel deposition amounts. As the XRF spectrometer, ZSX100e manufactured by Rigaku Corporation was used.

On the steel sheet having the nickel plating layer formed as described above, heat treatment was next conducted by continuous annealing under conditions of 660°C of heat treatment temperature, 30 seconds of soaking time, and a reducing atmosphere, whereby a treated steel sheet was obtained (first heat treatment step).

Next, rolling was conducted on the treated steel sheet, whereby a rolled steel foil was obtained (first rolling step). As rolling conditions at that time, cold rolling with a rolling reduction rate of 65.0% or higher but lower than 70.0% was applied. On the treated steel sheet after the first rolling step, annealing was next conducted under conditions of 590°C and 6 hours of soaking time, 80 hours in total, whereby a surface-treated steel foil was obtained (second heat treatment step).

On the surface-treated steel foil after the second heat treatment step, rolling was next conducted under conditions of 10.0% or higher but lower than 15.0% rolling reduction rate (second rolling step). It is to be noted that the total rolling reduction rate calculated from the thickness before the first rolling step and the thickness after the second rolling step was 70.0% or higher but lower than 75.0%. The pole densities, crystallite size, corrosion resistance, mechanical properties, non-metallic inclusions, and the like of the resulting surface-treated steel foil are presented in Table 2.

<Example 2>

Nickel plating was first conducted as in Example 1 except that the thickness of the original sheet as the base material 20 was changed to 180 μm, and the target thickness of the nickel plating was changed as presented in Table (nickel plating step).

On the steel sheet having the nickel plating layer formed as described above, heat treatment was next conducted by continuous annealing under conditions of 680°C of heat treatment temperature, 30 seconds of soaking time, and a reducing atmosphere (first heat treatment step), whereby a treated steel sheet was obtained.

Rolling was conducted on the treated steel sheet obtained as described above (first rolling step), whereby a rolled steel foil was obtained. As rolling conditions, cold rolling with a rolling reduction rate of 65.0% or higher but lower than 70.0% was conducted.

On the rolled steel foil after the above-described first rolling, annealing was conducted in a reducing atmosphere under conditions of 590°C and 6 hours of soaking time, 80 hours in total (second heat treatment step). On the surface-treated steel foil after the second heat treatment step, rolling was next conducted under conditions of 10.0% or higher but lower than 15.0% rolling reduction rate (second rolling step). It is to be noted that the total rolling reduction rate calculated from the thickness before the first rolling step and the thickness after the second rolling step was 70.0% or higher but lower than 75.0%. The pole densities, crystallite size, corrosion resistance, mechanical properties, non-metallic inclusions, and the like of the resulting surface-treated steel foil are presented in Table 2.

<Example 3>

Nickel plating was conducted as in Example 1 except that the target thickness of the nickel plating was changed as presented in Table (nickel plating step).

On the steel sheet having the nickel plating layer formed as described above, heat treatment was next conducted by continuous annealing under conditions of 680°C of heat treatment temperature, 30 seconds of soaking time, and a reducing atmosphere (first heat treatment step), whereby a treated steel sheet was obtained.

Rolling was conducted on the treated steel sheet obtained as described above (first rolling step), whereby a rolled steel foil was obtained. As rolling conditions, cold rolling with a rolling reduction rate of 65.0% or higher but lower than 70.0% was conducted.

On the rolled steel foil after the above-described first rolling, annealing was conducted in a reducing atmosphere under conditions of 590°C and 6 hours of soaking time, 80 hours in total (second heat treatment step). On the surface-treated steel foil after the second heat treatment step, rolling was next conducted under conditions of 10.0% or higher but lower than 15.0% rolling reduction rate (second rolling step). It is to be noted that the total rolling reduction rate calculated from the thickness before the first rolling step and the thickness after the second rolling step was 70.0% or higher but lower than 75.0%. The pole densities, crystallite size, corrosion resistance, mechanical properties, non-metallic inclusions, and the like of the resulting surface-treated steel foil are presented in Table 2.

<Example 4>

Nickel plating was conducted as in Example 1 except that the thickness of the original sheet was changed as presented in Table 1 (nickel plating step).

On the steel sheet having the nickel plating layer formed as described above, heat treatment was next conducted by continuous annealing under conditions of 680°C of heat treatment temperature, 30 seconds of soaking time, and a reducing atmosphere (first heat treatment step), whereby a treated steel sheet was obtained.

Rolling was conducted on the treated steel sheet obtained as described above (first rolling step), whereby a rolled steel foil was obtained. As rolling conditions, cold rolling with a rolling reduction rate of 65.0% or higher but lower than 70.0% was conducted.

On the rolled steel foil after the above-described first rolling, annealing was conducted in a reducing atmosphere under conditions of 590°C and 6 hours of soaking time, 80 hours in total (second heat treatment step). On the surface-treated steel foil after the second heat treatment step, rolling was next conducted under conditions of 35.0% or higher but lower than 40.0% rolling reduction rate (second rolling step). It is to be noted that the total rolling reduction rate calculated from the thickness before the first rolling step and the thickness after the second rolling step was 80.0% or higher but lower than 85.0%. The pole densities, crystallite size, corrosion resistance, mechanical properties, non-metallic inclusions, and the like of the resulting surface-treated steel foil are presented in Table 2.

<Example 5>

Nickel plating was conducted as in Example 1 except that the thickness of the original sheet as the base material was changed to 200 $\mu$m, and the target thickness of the nickel plating was changed as presented in Table (nickel plating step). On the steel sheet having the nickel plating layer formed as described above, heat treatment was next conducted by continuous annealing under conditions of 780°C of heat treatment temperature, 30 seconds of soaking time, and a reducing atmosphere (first heat treatment step), whereby a treated steel sheet was obtained.

Rolling was conducted on the treated steel sheet obtained as described above (first rolling step), whereby a rolled steel foil was obtained. As rolling conditions, cold rolling with a rolling reduction rate of 70.0% or higher but lower than 72.0% was conducted.

On the rolled steel foil after the above-described first rolling, annealing was conducted in a reducing atmosphere under conditions of 560°C and 6 hours of soaking time, 80 hours in total (second heat treatment step). No second rolling step was conducted. The total rolling reduction rate calculated from the thickness before the first rolling step and the thickness after the second rolling step was 70.0% or higher but lower than 75.0%. The pole densities, crystallite size, corrosion resistance, mechanical properties, non-metallic inclusions, and the like of the resulting surface-treated steel foil are presented in Table 2.

<Example 6>

Conducted were procedures similar to those in Example 1 except that the thickness of the original sheet was changed as presented in Table 1 and the second rolling step was not conducted. The results are presented in Table 2.

<Example 7>

A cold-rolled steel sheet (thickness: 180 μm) of low-carbon aluminum-killed steel having a chemical composition presented below was first prepared as an original sheet for the base material 20.

C: 0.052 wt%, Mn: 0.34 wt%, Si: 0.001 wt% or less, P: 0.012 wt%, S: 0.007 wt%, Al: 0.05 wt%, Balance: Fe and inevitable impurities

Conducted were procedures similar to those in Example 1 except that the heat treatment temperature of the first heat treatment step was changed to 680°C and the heat treatment temperature of the second heat treatment step was changed to 580°C. The results are presented in Table 2.

<Example 8>

Conducted were procedures similar to those in Example 7 except that nickel plating was additionally applied as replating with a front/back target thickness of 0.6 μm to surfaces in Example 7. The results are presented in Table 2. Here, as conditions for the replated nickel plating, the above-mentioned nickel plating conditions were used, and the energizing time was controlled to achieve the target thickness. As pretreatment for the nickel plating as the replating, strike nickel plating conditions presented below were used.

<Strike nickel plating conditions>

- Bath composition:

    Nickel sulfate hexahydrate: 250 g/L
    Sulfuric acid: 50 g/L

- Bath temperature: 60°C
- Current density: 30 A/dm$^2$
- Plating time: 5 seconds

<Example 9>

A cold-rolled steel sheet (thickness: 180 μm) of low-carbon aluminum-killed steel having a chemical composition presented below was first prepared as an original sheet for the base material 20.

C: 0.040 wt%, Mn: 0.35 wt%, Si: 0.01 wt%, P: 0.013 wt%, S: 0.018 wt%, Al: 0.047 wt%, Balance: Fe and inevitable impurities

Conducted were procedures similar to those in Example 8 except that the above-described original sheet was used. The results are presented in Table 2.

<Comparative Example 1>

Conducted were procedures similar to those in Example 4 except that the rolling reduction rates of the first rolling step and the second rolling step were changed. The results are presented in Table 1 and Table 2.

<Referential Example>

Conducted were procedures similar to those in Example 5 except that, after completion of the nickel plating step and the first heat treatment step, no further steps were conducted. The results are presented in Table 1 and Table 2.

[Table 1]

| | Steel type | Original sheet thickness | Ni plating step | | 1st heat treatment step | | 1st rolling step | 2nd heat treatment step | | 2nd rolling step | Total rolling reduction rate |
| | | | Target Ni thickness 1st side/2nd side | Overall thickness after Ni plating | Temp. | Time | Rolling reduction rate | Temp. | Time | Rolling reduction rate | |
| | - | μm | μm | μm | °C | sec | % | °C | hour | % | % |
| Ex. 1 | Type D | 170 | 5μm/5μm | 180 | 660 | 30 | 65.0-70.0 | 590 | 6 | 10.0-15.0 | 70.0-75.0 |
| Ex. 2 | Type D | 180 | 4μm/4μm | 189 | 680 | 30 | 65.0-70.0 | 590 | 6 | 10.0-15.0 | 70.0-75.0 |
| Ex. 3 | Type D | 180 | 3μm/3μm | 188 | 680 | 30 | 65.0-70.0 | 590 | 6 | 10.0-15.0 | 70.0-75.0 |
| Ex. 4 | Type D | 180 | 5μm/5μm | 190 | 680 | 30 | 65.0-70.0 | 590 | 6 | 35.0-40.0 | 80.0-85.0 |
| Ex. 5 | Type D | 200 | 3μm/3μm | 206 | 780 | 30 | 70.0-72.0 | 560 | 6 | 0 | 70.0-75.0 |
| Ex. 6 | Type D | 180 | 5μm/5μm | 190 | 660 | 30 | 65.0-70.0 | 590 | 6 | 0 | 65.0-70.0 |
| Ex. 7 | Type C | 180 | 5μm/5μm | 190 | 680 | 30 | 65.0-70.0 | 580 | 6 | 10.0-15.0 | 70.0-75.0 |
| Ex. 8 | Type C | 180 | 5μm/5μm | 190 | 680 | 30 | 65.0-70.0 | 580 | 6 | 10.0-15.0 | 70.0-75.0 |
| Ex. 9 | Type E | 180 | 5μm/5μm | 190 | 680 | 30 | 65.0-70.0 | 580 | 6 | 10.0-15.0 | 70.0-75.0 |
| Comp. Ex. 1 | Type D | 180 | 5μm/5μm | 190 | 680 | 30 | 72.0-75.0 | 590 | 6 | 15.0-20.0 | 75.0-80.0 |
| Ref. Ex. | Type D | 200 | 3μm/3μm | 206 | 780 | 30 | - | - | - | - | - |

[Table 2]

| | Ni deposition amount 1st side/2nd side | Thickness of surface-treated steel foil | Crystallite size (diameter_metal species) | EBSD (1st side) | | | | Corrosion resistance | Mechanical properties | | | |
|---|---|---|---|---|---|---|---|---|---|---|---|---|
| | | | | Preferential orientation in RD | Max. pole density in preferential orientation, D1 | [100][111] pole density, D2 | D2/D1 | SST results | TS (tensile strength) | YP (upper yield-point strength) | YP-EL (elongation at yield point) | EL (elongation at break) |
| | g/m² | μm | nm | - | - | - | - | Score | MPa | MPa | % | % |
| Ex. 1 | 12.1/12.1 | 50 | 21_Ni | (001) | 3.46 | 1.86 | 0.54 | 5 | 422 | 413 | 0.0 | 11.8 |
| Ex. 2 | 9.2/9.2 | 50 | 12_FeNi | (001) | 2.26 | 2.04 | 0.90 | 5 | 452 | 447 | 0.0 | 10.2 |
| Ex. 3 | 6.9/6.9 | 50 | 8_FeNi | (001) | 2.29 | 2.23 | 0.97 | 4 | 455 | 446 | 0.0 | 9.5 |
| Ex. 4 | 7.8/7.8 | 35 | 11_FeNi | (001) | 2.77 | 1.81 | 0.65 | 3 | 625 | 598 | 0.0 | 1.6 |
| Ex. 5 | 7.5/7.5 | 60 | 58_FeNi | (001) | 4.68 | 1.02 | 0.22 | 3 | 368 | 239 | 3.4 | 24.1 |
| Ex. 6 | 13.8/13.8 | 60 | 46_Ni | (001) | 4.39 | 2.1 | 0.48 | 5 | 379 | 243 | 3.6 | 23.5 |
| Ex. 7 | 11.4/11.4 | 48 | 13.8_FeNi | (001) | 3.74 | 1.71 | 0.46 | 5 | 479 | 478 | 0.0 | 14.0 |
| Ex. 8 | 16.7/16.7 | 49 | 26.3_Ni | (001) | 2.53 | 1.22 | 0.48 | 5 | 452 | 451 | 0.0 | 11.4 |
| Ex. 9 | 16.6/16.6 | 49 | 25.4_Ni | (001) | 2.47 | 1.26 | 0.51 | 3 | 449 | 440 | 0.0 | 13.2 |
| Comp. Ex. 1 | 9.0/9.0 | 40 | 22_Ni | (111) | 3.93 | 3.93 | - | 1 | 592 | 570 | 0.0 | 1.16 |
| Ref. Ex. | 26.6/26.6 | 200 | 117_Ni | (101) | 2.31 | 0.88 | - | 5 | - | - | - | - |

[Table 3]

| Steel type | Pieces/$10^3$ m$^2$ (converted to 50 $\mu$m thickness) | Evaluation |
|---|---|---|
| Type C | 2.11 | Particularly preferred |
| Type D | 6.05 | Particularly preferred |
| Type E | 43.42 | Practically usable |

Steel type
Pieces/$10^3$ m$^2$ (converted to 50 $\mu$m thickness) Evaluation
Steel type C Particularly preferred
Steel type E Practically usable

According to foregoing Examples and Comparative Example, the surface-treated steel foils produced in Examples exhibited high corrosion resistance. Meanwhile, the surface-treated steel foil of Comparative Example demonstrated that the required corrosion resistance was not available.

When the crystallize size was equal to or smaller than a predetermined value in Examples, it was also demonstrated that the yield point strength was increased and the elongation at yield point was suppressed. This has indicated that improvements can be made in fatigue strength and processability.

[Industrial Applicability]

As has been described above, the surface-treated steel foil of this invention can be applied to a wide field of industry such as automobiles and electronic equipment in addition to secondary batteries.

[Reference Signs List]

10:   Surface-treated steel foil
20:   Base material
30:   Iron-nickel alloy layer

**Claims**

1.   A surface-treated steel foil comprising:

   a steel sheet; and
   an iron-nickel alloy layer formed on at least one side of the steel sheet,
   wherein an iron-nickel alloy or nickel exists on an outermost surface of a side of the surface-treated steel foil which side has the iron-nickel alloy layer,
   a <001> pole density in an inverse pole figure of a rolling direction in the outermost surface of the side that has the iron-nickel alloy layer is higher than a <111> pole density, and
   the <001> pole density in the inverse pole figure of the rolling direction in the outermost surface of the side that has the iron-nickel alloy layer is higher than a <101> pole density.

2.   The surface-treated steel foil according to claim 1, wherein the <111> pole density in the inverse pole figure of the rolling direction is lower than 3.0.

3.   The surface-treated steel foil according to claim 1 or 2, wherein a plane (220) of nickel or a plane (220) of the iron-nickel alloy on the side that has the iron-nickel alloy layer has a crystallite size of 45 nm or smaller.

4.   The surface-treated steel foil according to claim 1 or 2, wherein the <001> pole density in the inverse pole figure of the rolling direction in the outermost surface of the side that has the iron-nickel alloy layer is 1.3 or higher.

5.   The surface-treated steel foil according to claim 1 or 2, wherein 50 pieces/$10^3$ m$^2$ or fewer of non-metallic inclusions of sizes of $\varphi$50 $\mu$m and greater are internally contained.

6. The surface-treated steel foil according to claim 1 or 2, wherein iron-nickel alloy layers are formed on both sides of the steel sheet.

7. The surface-treated steel foil according to claim 1 or 2, which has a tensile strength of 400 MPa or higher but 550 MPa or lower.

8. The surface-treated steel foil according to claim 1 or 2, which has a yield point strength of 360 MPa or higher.

9. The surface-treated steel foil according to claim 1 or 2, which has elongation of 3% or greater.

10. The surface-treated steel foil according to claim 1 or 2, which has a nickel deposition amount of 1.5 to 30.0 $g/m^2$ on the side that has the iron-nickel alloy layer.

11. The surface-treated steel foil according to claim 1 or 2, which has a thickness smaller than 100 $\mu$m.

12. A method for producing a surface-treated steel foil, comprising:

a nickel plating step of forming a nickel plating layer in a deposition amount of 1.5 to 70.0 $g/m^2$ on at least one side of a base material to provide a nickel-plated material;
a first heat treatment step of applying heat treatment to the nickel-plated material to form an iron-nickel alloy;
a first rolling step of rolling the nickel-plated material having the iron-nickel alloy; and
a second heat treatment step of applying heat treatment under heating conditions of 500°C to 650°C and 4 to 80 hours after the first rolling step.

EP 4 516 972 A1

[FIG. 1]

[FIG. 2]

22

[FIG. 3]

[FIG. 4]

| NICKEL PLATING | STEP A |
| --- | --- |
| FIRST HEAT TREATMENT | STEP B |
| FIRST ROLLING | STEP C |
| SECOND HEAT TREATMENT | STEP D |

[FIG. 5]

```
┌─────────────────────────────┐
│      NICKEL PLATING         │ ──── STEP A
└─────────────────────────────┘
              │
              ▼
      ┌───────────────┐
      │  FIRST HEAT   │ ──── STEP B
      │  TREATMENT    │
      └───────────────┘
              │
              ▼
      ┌───────────────┐
      │ FIRST ROLLING │ ──── STEP C
      └───────────────┘
              │
              ▼
┌─────────────────────────────┐
│  SECOND HEAT TREATMENT      │ ──── STEP D
└─────────────────────────────┘
              │
              ▼
┌─────────────────────────────┐
│      SECOND ROLLING         │ ──── STEP E
└─────────────────────────────┘
```

[FIG. 6A]

[FIG. 6B]

## INTERNATIONAL SEARCH REPORT

| | International application No. |
| --- | --- |
| | **PCT/JP2023/016947** |

### A. CLASSIFICATION OF SUBJECT MATTER

*C25D 7/06*(2006.01)i; *C22C 38/00*(2006.01)i; *C22C 38/28*(2006.01)i; *C25D 5/26*(2006.01)i; *C25D 5/48*(2006.01)i; *C25D 5/50*(2006.01)i; *C25D 7/00*(2006.01)i

FI: C25D7/06 Z; C25D5/26 A; C25D5/48; C25D5/50; C25D7/00 G; C22C38/00 301T; C22C38/28

According to International Patent Classification (IPC) or to both national classification and IPC

### B. FIELDS SEARCHED

Minimum documentation searched (classification system followed by classification symbols)

C25D7/06; C22C38/00; C22C38/28; C25D5/26; C25D5/48; C25D5/50; C25D7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2013/157600 A1 (NIPPON STEEL & SUMITOMO METAL CORPORATION) 24 October 2013 (2013-10-24) | 12 |
| | claims, paragraphs [0076]-[0077], [0080], [0085]-[0090], table 2, example 28 | |
| A | | 1-11 |
| X | WO 2016/013575 A1 (NIPPON STEEL & SUMITOMO METAL CORPORATION) 28 January 2016 (2016-01-28) | 12 |
| | claims, paragraphs [0066]-[0067], [0072], [0076]-[0081], table 2, examples | |
| A | | 1-11 |
| Y | WO 2021/200506 A1 (NIPPON STEEL CHEMICAL & MAT CO LTD) 07 October 2021 (2021-10-07) | 12 |
| | paragraphs [0044]-[0049], [0056] | |
| A | | 1-11 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 June 2023** | **27 June 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

International application No.

**PCT/JP2023/016947**

**C.** **DOCUMENTS CONSIDERED TO BE RELEVANT**

| Category* | Citation of document, with indication, where appropriate, of the relevant passages | Relevant to claim No. |
|---|---|---|
| Y | JP 6-036702 A (TOYO KOHAN CO LTD) 10 February 1994 (1994-02-10) paragraph [0013] | 12 |
| A | | 1-11 |

Form PCT/ISA/210 (second sheet) (January 2015)

INTERNATIONAL SEARCH REPORT
Information on patent family members

International application No.

**PCT/JP2023/016947**

| Patent document cited in search report | | | Publication date (day/month/year) | Patent family member(s) | | | Publication date (day/month/year) |
|---|---|---|---|---|---|---|---|
| WO | 2013/157600 | A1 | 24 October 2013 | US 2014/0287259 A1 claims, paragraphs [0109]-[0110], [0117], [0121]-[0124], table 2, example 28 | | | |
| | | | | EP | 2770079 | A1 | |
| | | | | CN | 103917684 | A | |
| | | | | KR 10-2014-0108214 | | A | |
| WO | 2016/013575 | A1 | 28 January 2016 | US 2017/0170436 A1 claims, paragraphs [0120]-[0121], [0129], [0136]-[0139], table 2, examples | | | |
| | | | | CN | 106536779 | A | |
| | | | | KR 10-2017-0034894 | | A | |
| WO | 2021/200506 | A1 | 07 October 2021 | EP 4131513 A1 paragraphs [0044]-[0049], [0055] | | | |
| | | | | KR 10-2022-0132580 | | A | |
| | | | | CN | 115362580 | A | |
| JP | 6-036702 | A | 10 February 1994 | US 5618401 A column 4, lines 39-51 | | | |
| | | | | CN | 1082763 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6140611 B
- WO 2021020338 A
- JP H08333689 A

**Non-patent literature cited in the description**

- TOYO KOHAN. Technical Reports of Toyo Kohan Co., Ltd., vol. 33, 17-22
- *TOYO KOHAN*, vol. 33, 17-22